# EUROPEAN PATENT SPECIFICATION

(11) **EP 2 246 551 B1**
(45) Date of publication and mention of the grant of the patent: **15.11.2017**
(21) Application number: 09819017.6
(22) Date of filing: 28.01.2009
(51) Int. Cl.: F02M 21/02, F02B 19/10, F02B 19/12, F02B 43/04, F02D 19/02, B01D 53/047

(54) **GAS ENGINE USING LOW CALORIE GAS FUEL**
GASMOTOR MIT EINEM KALORIENARMEN GASBRENNSTOFF
MOTEUR À GAZ UTILISANT UN COMBUSTIBLE GAZEUX BASSE CALORIE

(30) Priority: 10.10.2008 JP 2008263924
(43) Date of publication of application: 03.11.2010
(73) Proprietor: Mitsubishi Heavy Industries, Ltd., Tokyo 108-8215 (JP)
(72) Inventor: YUKI, Akihiro, Yokohama-shi Kanagawa 236-8515 (JP)
(74) Representative: Hoffmann Eitle
(86) International application number: PCT/JP2009/051811
(87) International publication number: WO 2010/041478

(56) References cited:
- JP-A- 5 321 670
- JP-A- 6 039 233
- JP-A- H0 932 708
- JP-A- 61 255 995
- JP-A- 63 178 196
- JP-A- H05 321 670
- JP-A- S61 255 995
- JP-A- 2000 008 960
- JP-A- 2003 253 274
- JP-A- 2004 124 847
- JP-A- 2004 154 761
- JP-A- 2005 240 586
- JP-A- 2007 077 870
- JP-A- 2008 240 624
- JP-A- 2008 240 624
- US-A- 5 012 037
- US-A1- 2005 205 022

## Description

### BACKGROUND OF THE INVENTION

### Field of the Invention

The present invention relates to a gas engine using low calorie gas such as coal mine methane, having the concentration of methane of 50% or less as fuel in which the low calorie gas is injected into an auxiliary combustion chamber and ignited by an ignition plug, an ignition flame from the ignition combustion in the auxiliary combustion chamber is ejected into a main combustion chamber via a communication hole connecting the auxiliary combustion chamber and the main combustion chamber so as to combust in the main combustion chamber an mixture including low calorie gas drawn in through an intake port separately from a flow path to the auxiliary combustion chamber.

### Description of the Related Art

The gas engine using low calorie gas such as coal mine methane, having the concentration of methane of 50% or less as fuel is constructed such that the low calorie gas is injected into an auxiliary combustion chamber and ignited by an ignition plug, an ignition flame from the ignition combustion in the auxiliary combustion chamber is ejected into a main combustion chamber via a communication hole communication with the auxiliary combustion chamber and the main combustion chamber so as to combust in the main combustion chamber an mixture including low calorie gas being introduced through an intake port separately from the flow path to the auxiliary combustion chamber.

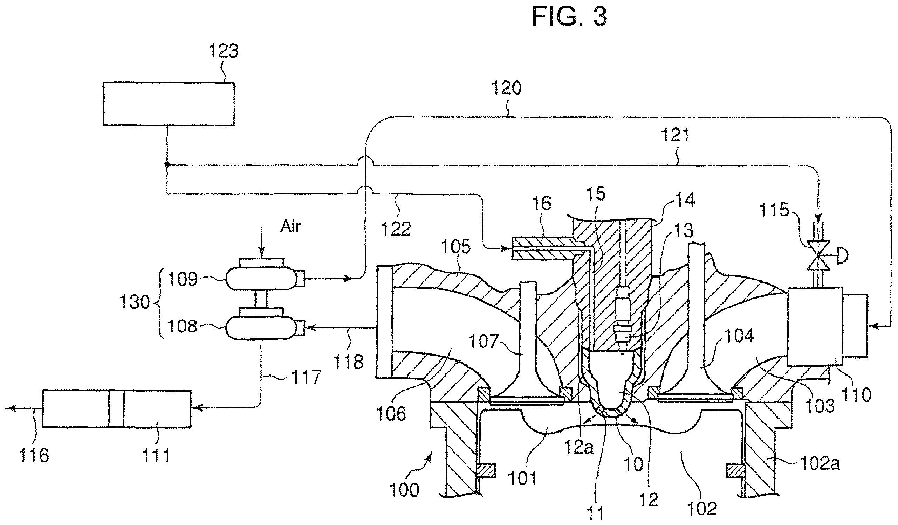

FIG.3 is a configuration diagram showing the gas engine using low calorie gas as fuel.

FIG.3 illustrates a four-stroke engine 100 of an auxiliary combustion chamber type using an ignition plug having a piston 102 fit in a cylinder liner 102a such that the piston freely reciprocates, a main combustion chamber 101 formed by a bottom surface of a cylinder head 105, a top surface of the piston 102 and an inner surface of the cylinder liner 102a.

The engine 100 mainly comprises an intake port 103 being connected to the main combustion chamber 101, an intake valve 104 for opening and closing the intake port 103, an exhaust port 106 being connected to the main combustion chamber 101 and an exhaust valve for opening and closing the exhaust port 106.

The exhaust port 106 is connected to a turbine 108 of an exhaust turbo-charger 130 via an exhaust pipe 118. The exhaust gas having been used for driving the turbine 108, travels through another exhaust pipe 117 and then is introduced to an exhaust gas purification unit 111 having a catalyst layer or the like where the exhaust gas is cleaned up and then discharged to outside via an exhaust pipe 116.

Meanwhile, a compressor 109 which is coaxially driven with the turbine 108, compresses an intake air and the compressed air is fed to a gas mixer 110 via an air pipe.

The low calorie gas having the concentration of methane of 50% or less such as coal mine methane is used as fuel gas and the low calorie gas is stored in a low calorie gas supply source 123.

Further, the low calorie gas reaches a gas regulating valve 115 via a main fuel gas pipe 121 which controls the amount of the gas and opening and closing time of the valve, and then fed to the gas mixer 110.

Furthermore, at the gas mixer 110, air from the air pipe 120 and the low calorie gas from the main fuel gas pipe 121 are premixed so as to produce premixed gas. The premixed gas is then fed to the intake port 103.

Next, the premixed gas is introduced to the intake valve through the intake port 103 and then is supplied to the main combustion chamber 101 by opening the intake valve 104.

A mouthpiece 12a of the auxiliary combustion chamber is fixed to the cylinder head from the top thereof by a mouthpiece holding member 12. The auxiliary combustion chamber 12 with a certain amount of cubic capacity is formed in the mouthpiece 12a.

An ignition plug 13 is fixed to the top of the auxiliary combustion chamber 12 so as to ignite the gas inside the auxiliary combustion chamber 12.

And, in the mouthpiece holding member 12, a joint 16 is screwed, one end of which communicates with the low calorie gas supply source 123 via a fuel gas pipe 122 and another end of which communicates with a fuel passage 15 opening to the auxiliary combustion chamber.

During the combustion, as described above, the low calorie gas from the supply source 123 is passed through the fuel gas pipe 122 and then the fuel passage 15 and ejected into the auxiliary combustion chamber 12. Meanwhile, spark discharge is caused by the ignition plug 13 at certain timing, and the flame from the ignition combustion is ejected into the main combustion chamber 101 through the communication hole 11.

Meanwhile, the divided low calorie gas reaches the gas regulating valve 115 via the main fuel gas pipe 121, which controls the amount of the gas and opening and closing time thereof, and then fed to the gas mixer 110.

At the gas mixer 110, the premixed gas is produced by premixing the low calorie gas and the air. The premixed gas is then fed to the intake port 103. And the premixed gas is introduced to the intake valve 104 through the intake port 103 and then supplied to the main combustion chamber 101 by opening the intake valve 104.

Meanwhile, the spark discharge is caused by the ignition plug 13 and the ignition flame from the ignition combustion is ejected into the main combustion chamber 101 through the communication hole 11 so as to combust the gas inside the main combustion chamber 101.

The exhaust gas having been combusted in the main combustion chamber 101 is sent to the turbine 108 of the exhaust turbo-charger 130 via the exhaust port 106 and the exhaust pipe 118.

Further, Patent Document 1(JP3649479B) discloses a means to use a fuel gas for ignition or for starting and a fuel gas for a regular use.

Furthermore, Patent Document 2 (JP2000-008960A) discloses a gas fill up mechanism in which a main combustion chamber is filled up with lean mixture of a first fuel and an auxiliary combustion chamber is filled up with a second fuel with high ignition property whose combustion speed is faster than that of the first fuel.

However, there are unresolved problems in the above mentioned techniques as described below.

Specifically, the low calorie gas engine of the above techniques using the low calorie gas having the methane concentration of 50% or less is constructed so that the low calorie gas sprayed in the auxiliary combustion chamber is ignited by the ignition plug and then the flame from the ignition combustion in the auxiliary combustion chamber is ejected into the main combustion chamber via the communication hole, thereby combusting the premixed gas including the low calorie gas being fed to the main combustion chamber through the intake port separately from the flow path to the auxiliary combustion chamber.

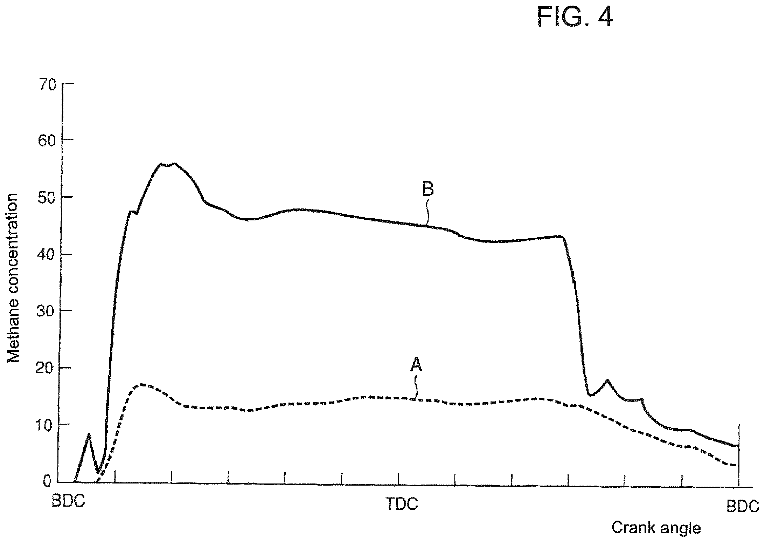

However, as shown in FIG.4, the gas engine A using the low calorie gas having the methane concentration of 50% or less such as coal mine methane, has a small amount of heat generation which is about 30% of that of another gas engine B using normal calorie gas as fuel and thus it is difficult to induce the ignition combustion by the ignition plug in such state.

In view of this, Patent Document 2 uses the gas fill up mechanism in which the main combustion chamber is filled up with the lean mixture including the first fuel and the auxiliary combustion chamber is filled up with the second fuel with high ignition property whose combustion speed is faster than that of the first fuel. However, this mechanism of Patent Document 2 is not applicable without modification to the engine using the low calorie gas having the methane concentration of 50% or less as fuel.

### SUMMARY OF THE INVENTION

In view of the problems above, an object of the present invention is to provide a gas engine using low calorie gas such as coal mine methane with the concentration of methane of 50% or less as fuel, in which the low calorie gas is treated to improve the methane concentration and then injected into the auxiliary combustion chamber to cause an ignition combustion by the ignition plug.

To achieve the object of the present invention, the present invention proposes a gas engine using low calorie gas with methane concentration of 50% or less as fuel, comprising: a main combustion chamber in which mixture gas containing the low calorie gas incorporated through an intake port is combusted; an auxiliary combustion chamber communicated with the main combustion chamber through a communication hole, the low calorie gas being fed to the auxiliary combustion chamber separately from a flow path to the main combustion chamber; an ignition plug arranged in the auxiliary combustion chamber for igniting the low calorie gas sprayed into the auxiliary combustion chamber to produce an ignition flame, the mixture gas in the main combustion chamber being combusted by the ignition flame ejected through the communication hole; and a PSA treatment unit (Pressure Swing Adsorption treatment unit) for obtaining methane gas with high methane concentration by separating impurities and inactive gas except for methane gas from the low calorie gas by adsorption, the methane gas with high methane concentration obtained by the PSA treatment unit being introduced into the auxiliary combustion chamber so that the methane gas is combusted by the ignition plug to produce the ignition flame.

In the present invention, it is preferable that the gas engine further comprises: a gas regulating valve for adjusting an amount of the low calorie gas for the main combustion chamber that is branched on an upstream side of the PSA treatment unit; a gas mixer for producing a premixture gas using the low calorie gas of which amount is adjusted by the gas regulating valve, the premixture gas being introduced to the main combustion chamber through the intake port.

It is also preferable that the gas engine of the present invention further comprises a buffer tank arranged at an exit of the PSA treatment unit for averaging out the methane concentration of the methane gas obtained by the PSA treatment unit.

The present invention also provides a gas engine using low calorie gas with methane concentration of 50% or less as fuel, comprising: a main combustion chamber in which mixture gas containing the low calorie gas incorporated through an intake port is combusted; an auxiliary combustion chamber communicated with the main combustion chamber through a communication hole, the low calorie gas being fed to the auxiliary combustion chamber separately from a flow path to the main combustion chamber; an ignition plug arranged in the auxiliary combustion chamber for igniting the low calorie gas sprayed into the auxiliary combustion chamber to produce an ignition flame, the mixture gas in the main combustion chamber being combusted by the ignition flame ejected through the communication hole; and a TSA treatment unit (Thermal Swing Adsorption treatment unit) for obtaining methane gas with high methane concentration by temperature increase of approximately 200°C to separate impurities and inactive gas except for methane gas from the low calorie gas by adsorption, the methane gas with high methane concentration obtained by the TSA treatment unit being introduced into the auxiliary combustion chamber so tha t the methane gas is combusted by the ignition plug to produce the ignition flame.

It is also preferable that the gas engine further comprises an exhaust gas introduction pipe for transferring an exhaust gas from the gas engine, the exhaust gas introduction pipe being connected to the TSA treatment unit so as to use heat of the exhaust gas to raise the temperature of the low calorie gas in the TSA treatment unit.

According to the present invention, the gas engine using the low calorie gas as fuel comprises the PSA treatment unit (Pressure Swing Adsorption treatment unit) for obtaining methane gas with high methane concentration by separating impurities and inactive gas except for methane gas from the low calorie gas by adsorption in which the methane gas with high methane concentration obtained by the PSA treatment unit is introduced into the auxiliary combustion chamber so as to cause the ignition combustion in the auxiliary combustion chamber by the ignition plug.

Therefore, the low calorie gas with only 30% heat generation in comparison with the regular calorie gas (ref. FIG.4), is processed in the PSA treatment unit which separates impurities of the gas by adsorption by pressurizing and filtering the low calorie gas through adsorptive materials such as zeolite and thus the methane gas having 100% methane concentration can be obtained.

The amount of the gas being supplied to the auxiliary combustion chamber is only about 2 % of the total amount and thus 2% of the methane gas with 100% methane concentration is enough to start the ignition in the auxiliary combustion chamber. The methane gas is injected into the auxiliary chamber.

The methane gas obtained from for producing the ignition flame is then ejected into the auxiliary combustion chamber. The ejected methane gas is ignited by the ignition plug at a prescribed time to produce the spark discharge, and the ignition flame produced by the ignition combustion is ejected into the main combustion chamber through the communication hole.

Therefore, according to the present invention, the methane gas having 100% methane concentration can be obtained from the low calorie gas by performing the Pressure Swing Adsorption treatment by the PSA treatment unit and the methane gas is injected into the auxiliary combustion chamber so as to produce the spark discharge by the ignition plug and the low calorie gas having the methane concentration of 50% or less can still be ignited. Therefore, the preferred embodiment is applicable to the engine using the low calorie gas having the methane concentration of 50% or less without lowering the ignition performance in the auxiliary combustion chamber.

Moreover, the gas engine of the present invention further compress the gas regulating valve for adjusting an amount of the low calorie gas for the main combustion chamber that is branched on the upstream side of the PSA treatment unit, and the gas mixer for producing a premixture gas using the low calorie gas of which amount is adjusted by the gas regulating valve, in which the premixture gas is introduced to the main combustion chamber through the intake port. Therefore, the methane gas with 100% methane concentration can be obtained from the low calorie gas by performing the Pressure Swing Adsorption treatment in the PSA treatment unit and the ignition performance inside the auxiliary combustion chamber can be easily achieved by injecting the methane gas into the auxiliary combustion chamber and producing the spark discharge by the ignition plug. Further, even when the low calorie gas is used as main combustion gas, the ignition performance in the auxiliary combustion chamber can be easily obtained and thus, it is easy to produce the premixed gas by introducing the low calorie gas to the gas mixer 110 and premixing with the air from the turbocharger. That is, it is easy to produce combustible lean mixture of the low calorie gas and the air.

The gas engine of the present invention further comprises the buffer tank arranged at the exit of the PSA treatment unit for A seal structure for a gas turbine combustor as set forth in claim 1, characterized in that the beads or the inner surfaces, on the combustion gas passage side, of the recess grooves, with which the beads are made into contact, are coated thereover with a wear-resistant film. Averaging out the methane concentration of the methane gas obtained by the PSA treatment unit. Therefore, the uneven concentration of the gas with 100% methane concentration obtained by the PSA treatment unit is averaged out by filtering the gas through the buffer tank and thus the gas with constant methane concentration can be supplied to the auxiliary combustion chamber.

According to the present invention, in the gas engine using the low calorie gas as fuel, the TSA treatment unit is provided for obtaining methane gas with high methane concentration by temperature increase of approximately 200°C to separate impurities and inactive gas except for methane gas from the low calorie gas by adsorption in which the methane gas with high methane concentration obtained by the TSA treatment unit is introduced into the auxiliary combustion chamber so that the methane gas is ignited by the ignition plug to produce the ignition flame. Therefore, in the TSA treatment unit, the low calorie gas having approximately 30% heat energy of the regular calorie gas (ref. FIG.4) is processed by the Thermal Swing Adsorption treatment so as to separate impurities with temperature rise of approximately 200°C and thus the methane gas with 100% methane concentration can be obtained.

The amount of the gas being supplied to the auxiliary combustion chamber is only about 2 % of the total amount and thus 2% of the methane gas with 100% methane concentration is enough to start the ignition in the auxiliary combustion chamber. The methane gas is injected into the auxiliary chamber.

The ejected methane gas is ignited by the ignition plug at a prescribed time to produce the spark discharge, and the ignition flame produced by the ignition combustion is ejected into the main combustion chamber through the communication hole, thereby making the ignition combustion in the auxiliary combustion chamber easy.

Moreover, in the present invention, the exhaust gas intake pipe for transferring the exhaust gas is connected to the TSA treatment unit and the heat of the exhaust gas is used to increase the temperature of the low calorie gas.

In this manner, the heat energy of the exhaust gas is used for raising the temperature of the low calorie gas in the TSA treatment unit and thus the exhaust heat of the exhaust gas can be utilized.

### BRIEF DESCRIPTION OF THE DRAWINGS

FIG.1 illustrates a structure around a combustion chamber of a gas engine using low calorie gas as fuel of a first preferred embodiment of the present invention.
FIG.2 illustrates a structure around a combustion chamber of a gas engine using low calorie gas as fuel of a second preferred embodiment of the present invention.
FIG.3 illustrates a structure around a combustion chamber of a gas engine using low calorie gas as fuel of a conventional technology.
FIG.4 is a comparison chart comparing the methane concentration of the low calorie gas and existing gas.

### DETAILED DESCRIPTION OF THE PREFERRED EMBODIMENTS

A preferred embodiment of the present invention will now be described in detail with reference to the accompanying drawings. It is intended, however, that unless particularly specified, dimensions, materials, shape, its relative positions and the like shall be interpreted as illustrative only and not limitative of the scope of the present.

### (First Preferred Embodiment)

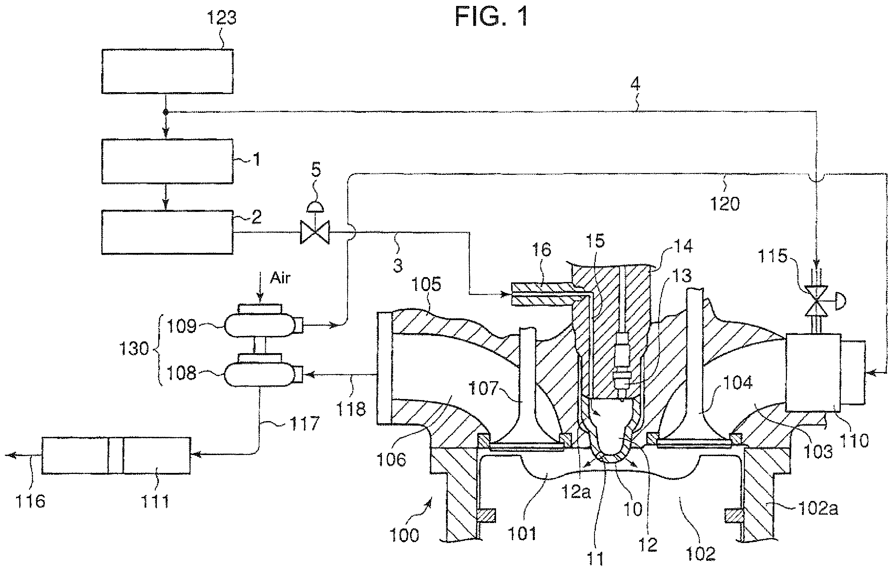

FIG.1 illustrates a structure around a combustion chamber of a gas engine using low calorie gas as fuel of a first preferred embodiment of the present invention.

As shown in FIG.4, the low calorie gas having the low methane concentration of 50% or less and a small amount of heat generation which is about 30% of the regular gas is used as fuel and the low calorie gas is stored in a low calorie gas supply source 123.

The outlet of the low calorie gas supply source 123 is connected to a PSA treatment unit 1.

In the PSA treatment unit, the low calorie gas with only 30% heat generation in comparison with the regular calorie gas (ref. FIG.4) is processed to separate impurities by adsorption by pressurizing and filtering the low calorie gas through adsorptive materials such as zeolite. In this manner, the Pressure Swing Adsorption treatment (PSA treatment) is performed to obtain the methane gas having 100% methane concentration. The operation of the PSA treatment unit 1 is already known and thus will not be explained further.

The gas treated in the PSA treatment unit 1 is introduced to a buffer tank 2 which is arranged at the outlet of the PSA treatment unit 1 and which averages out the methane concentration of the gas having been treated in the PSA treatment unit 1.

Specifically, the uneven concentration of the gas having been processed by the PSA treatment unit 1 to have 100% methane concentration, is averaged out by filtering the gas through the buffer tank 2 and the processed gas with constant methane concentration is then supplied to an auxiliary combustion chamber 12 which will be described later.

The gas from the buffer tank 2 is transferred through a fuel gas pipe 3 and introduced to a fuel passage 15. The fuel gas passage 15 is formed in a mouthpiece holding member 14 and a joint 16 having one end thereof being screwed in the mouthpiece holding member 14. The fuel passage 15 is perforated through the mouthpiece holding member 14 and opens to the auxiliary combustion chamber 12.

Amouthpiece 12a of the auxiliary combustion chamber 12 is fixed to a cylinder head 105 from the top thereof by the mouthpiece holding member 14.

An ignition plug 13 is fixed to the top of the auxiliary combustion chamber 12 so as to ignite the gas inside the auxiliary combustion chamber 12.

Meanwhile, the low calorie gas being supplied from the low calorie gas supply source 123 and branched from the flow going to the PSA treatment unit 1, is passed through a main fuel gas pipe 4 and through a gas regulating valve 115 which controls the amount of the gas flow and the opening/closing time thereof, and introduced into a gas mixer 110.

The gas mixer 110 incorporates the compressed air from a compressor 109 through an air pipe 120 and the low calorie gas from the main fuel gas pipe 4 so as to produce premixed gas. The premixed gas is fed to an intake port 103 of the engine.

Next, the premixed gas is introduced to an intake valve 104 through the intake port 103, and supplied to a main combustion chamber 101 by opening the intake valve 104.

The operation of an engine 100 during the combustion is explained below.

In the manner described above, the low calorie gas from the low calorie gas supply source 123 with 30% heat generation of the regular calorie gas (ref. FIG.4) is processed by the PSA treatment unit 1 in which the low calorie gas is pressurized and the impurities are separated by adsorption by filtering the gas through the absorptive materials such as zeiolite so as to obtain the methane gas having 100% methane concentration.

The gas processed in the PSA treatment unit is introduced to the buffer tank 2 arranged at the exit of the PSA treatment unit 1, in which the gas introduced from the PSA treatment unit is processed so as to average out the methane concentration thereof.

The gas whose methane concentration is averaged out by the buffer tank 2, is introduced to the fuel gas pipe 3 and the gas flow passage is regulated by a throttle valve 5 arranged in the fuel gas pipe 3 and then the gas is ejected into the auxiliary combustion chamber 12 through the fuel passage 15.

In the process, spark discharge is caused by the ignition plug 13 at certain timing, and the flame from the ignition combustion is ejected into the main combustion chamber 101 through a communication hole 11.

Meanwhile, the low calorie gas which is supplied from the low calorie gas supply source 123 and branched from the flow path to the PSA treatment unit 1, is introduced to the gas regulating valve 115 through the main fuel gas pipe 4, where the amount of the gas and opening and closing time of the valve is controlled, and then introduced to the gas mixer 110.

Further, at the gas mixer 110, the compressed air being introduced from the compressor 109 through the air pipe 120 and the low calorie gas from the fuel gas pipe 4 are premixed so as to produce premixed gas. The premixed gas is then fed to the intake port 103.

Next, the premixed gas is introduced to the intake valve 104 through the intake port 103 and then supplied to the main combustion chamber 101 by opening the intake valve 104.

In the auxiliary combustion chamber 12, the spark discharge is produced by the ignition plug 13 and the ignition flame from the ignition combustion is ejected to the premixed gas inside the main combustion chamber 101 through the communication hole 11 so as to combust the premixed gas inside the main combustion chamber 101.

The exhaust gas after the combustion is transferred to an exhaust port 106 and then to a turbine 108 of a exhaust turbo-charger 130 via an exhaust pipe 118.

As described above, according to the preferred embodiment, the amount of the gas being supplied to the auxiliary combustion chamber is only about 2% of the total amount and the 2% of the low calorie gas is used to produce the methane gas having 100% methane concentration for producing the ignition flame inside the auxiliary combustion chamber 12. Therefore, although the PSA treatment unit 1 needs to be newly installed, the general structure of the gas supply unit is not significantly modified and thus the additional installation cost can be kept to a minimum.

Further, according to the preferred embodiment, the methane gas having 100% methane concentration can be obtained from the low calorie gas by performing the Pressure Swing Adsorption treatment by the PSA treatment unit 1 and the methane gas is injected into the auxiliary combustion chamber so as to produce the spark discharge by the ignition plug 13 and the low calorie gas having the methane concentration of 50% or less can still be ignited. Therefore, the preferred embodiment is applicable to the engine using the low calorie gas having the methane concentration of 50% or less without lowering the ignition performance in the auxiliary combustion chamber.

Furthermore, according to the preferred embodiment, the methane gas with 100% methane concentration can be obtained from the low calorie gas by PSA treatment in the PSA treatment unit 1 and the methane gas is injected into the auxiliary combustion chamber 12 to produce the spark discharge by the ignition plug 13. Therefore, even when the low calorie gas is used as main combustion gas, the ignition performance in the auxiliary combustion chamber can be easily obtained and it is easy to produce the premixed gas by introducing the low calorie gas to the gas mixer 110 and premixing with the air from the turbocharger. That is, it is easy to produce combustible lean mixture of the low calorie gas and the air.

### (Second Preferred Embodiment)

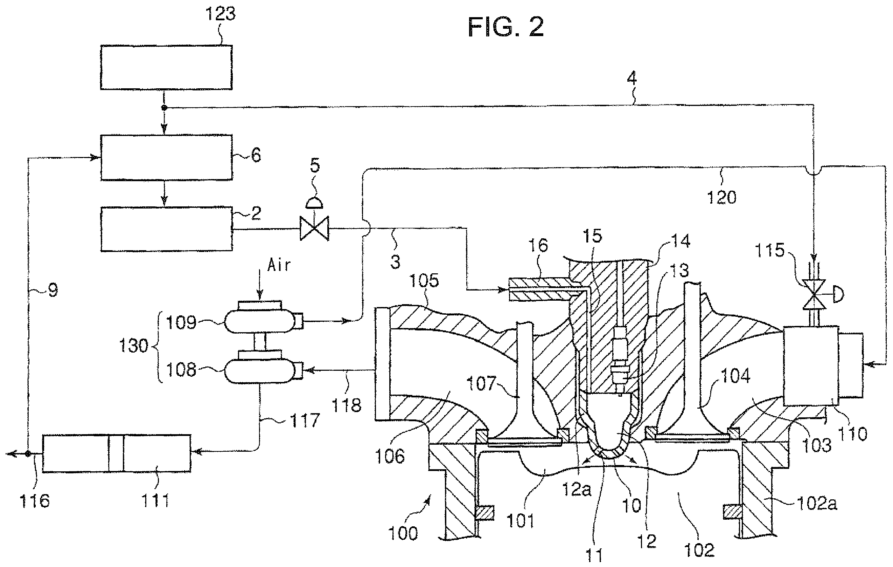

FIG.2 illustrates a structure around a combustion chamber of a gas engine using low calorie gas as fuel of a second preferred embodiment of the present invention.

In the second preferred embodiment, a TSA treatment unit 6 (Thermal Swing Adsorption treatment unit) is provided instead of the PSA treatment unit 1 of the first preferred embodiment.

Specifically, in the second preferred embodiment, the low calorie gas from the low calorie gas supply source 123 is introduced to the TSA treatment unit 6.

In the TSA treatment unit 6, the low calorie gas having approximately 30% heat energy of the regular calorie gas (ref. FIG.4) is processed by a Thermal Swing Adsorption treatment so as to separate impurities with temperature rise of approximately 200°C and obtain the methane gas having 100% methane concentration. The operation of the TSA treatment unit is already known and thus will not be explained further.

Moreover, in a manner similar to the first preferred embodiment, the gas treated in the TSA treatment unit 6 is introduced to the buffer tank 2 which is arranged at the outlet of the TSA treatment unit 6 and which averages out the methane concentration of the methane gas. By passing the gas through the buffer tank 2, the methane concentration of the methane gas is averaged out and the gas with constant concentration can be supplied to the auxiliary combustion chamber which will be described later in detail.

The gas from the buffer tank 2 is passed through the fuel gas pipe 3 and introduced to the fuel passage 15. The fuel passage 15 is formed in the mouthpiece holding member 14 and the joint 16 having one end screwed in the mouthpiece holding member 14. The fuel passage 15 is perforated through the mouthpiece holding member 14 and opens to the auxiliary combustion chamber 12.

The mouthpiece 12a of the auxiliary combustion chamber 12 is fixed to the cylinder head 105 from the top thereof by the mouthpiece holding member 14.

The ignition plug 13 is fixed to the top of the auxiliary combustion chamber 12 so as to ignite the gas inside the auxiliary combustion chamber 12 with the ignition plug 13.

In the second preferred embodiment, the discharge gas of the gas engine is treated in an exhaust gas purification unit 111 and then introduced to the TSA treatment unit 6 through an exhaust pipe 116 via an exhaust gas intake pipe 9. In the TSA treatment unit 6, the heat of the exhaust gas introduced through the exhaust gas pipe 116 is used to increase the temperature of the low calorie gas. It is also possible to introduce the heat of the exhaust gas from the upstream side of the exhaust gas purification unit 111.

In this manner, the heat energy of the exhaust gas is used for raising the temperature of the low calorie gas in the TSA treatment unit 6. The exhaust heat of the engine can be utilized.

According to the second preferred embodiment, the amount of the gas being supplied to the auxiliary combustion chamber is only about 2 % of the total and the 2% of the methane gas with 100% concentration is enough to start the ignition in the auxiliary combustion chamber 12. Therefore, although the TSA treatment unit 6 needs to be newly installed, the general structure of the gas supply unit is not significantly modified and thus the additional installation cost can be kept to a minimum.

Further, the methane gas having 100% methane concentration can be obtained from the low calorie gas by performing the Thermal Swing Adsorption treatment by the TSA treatment unit 6 and the methane gas is injected into the auxiliary combustion chamber so as to produce the spark discharge by the ignition plug 13 at a prescribed time, and the ignition flame produced by the ignition combustion is ejected into the main combustion chamber 101 through the communication hole 11 and thus the ignition combustion in the auxiliary combustion chamber 12 is made easy.

The rest of the structure of the engine is the same as that of the first preferred embodiment and the same reference numbers are used.

### INDUSTRIAL APPLICABILITY

According to the present invention, the gas engine using low calorie gas such as coal mine methane with the concentration of methane of 50% or less as fuel, in which the low calorie gas is treated to improve the methane concentration and then injected into the auxiliary combustion chamber to produce an ignition combustion by the ignition plug, can be provided.

## Claims

1. A gas engine using low calorie gas with methane concentration of 50% or less as fuel, comprising:
a main combustion chamber (101) in which mixture gas containing the low calorie gas incorporated through an intake port (103) is combusted;
an auxiliary combustion chamber (12) communicated with the main combustion chamber (101) through a communication hole (11), the low calorie gas being fed to the auxiliary combustion chamber (12) separately from a flow path to the main combustion chamber (101);
an ignition plug (13) arranged in the auxiliary combustion chamber (12) for igniting the low calorie gas sprayed into the auxiliary combustion chamber to produce an ignition flame, the mixture gas in the main combustion chamber (101) being combusted by the ignition flame ejected through the communication hole (11) ; and
a PSA treatment unit (Pressure Swing Adsorption treatment unit) (1) for obtaining methane gas with high methane concentration by separating impurities and inactive gas except for methane gas from the low calorie gas by adsorption, the methane gas with high methane concentration obtained by the PSA treatment unit (1) being introduced into the auxiliary combustion chamber (12) so that the methane gas is combusted by the ignition plug (13) to produce the ignition flame.

2. The gas engine using the low calorie gas as fuel according to claim 1, further comprising:
a buffer tank (2) arranged at an exit of the PSA treatment unit (1) for averaging out the methane concentration of the methane gas obtained by the PSA treatment unit (1) and to be introduced into the auxiliary combustion chamber (12).

3. A gas engine using low calorie gas with methane concentration of 50% or less as fuel, comprising:
a main combustion chamber (101) in which mixture gas containing the low calorie gas incorporated through an intake port (103) is combusted;
an auxiliary combustion chamber (12) communicated with the main combustion chamber (101) through a communication hole (11), the low calorie gas being fed to the auxiliary combustion chamber (12) separately from a flow path to the main combustion chamber (101);
an ignition plug (13) arranged in the auxiliary combustion chamber (12) for igniting the low calorie gas sprayed into the auxiliary combustion chamber to produce an ignition flame, the mixture gas in the main combustion chamber (101) being combusted by the ignition flame ejected through the communication hole (11) ; and
a TSA treatment unit (Thermal Swing Adsorption treatment unit) (6) for obtaining methane gas with high methane concentration by temperature increase of approximately 200°C to separate impurities and inactive gas except for methane gas from the low calorie gas by adsorption, the methane gas with high methane concentration obtained by the TSA treatment unit (6) being introduced into the auxiliary combustion chamber (12) so that the methane gas is combusted by the ignition plug (13) to produce the ignition flame.

4. The gas engine using the low calorie gas as fuel according to claim 3, further comprising:
an exhaust gas introduction pipe (116) for transferring an exhaust gas from the gas engine, the exhaust gas introduction pipe (116) being connected to the TSA treatment unit (6) so as to use heat of the exhaust gas to raise the temperature of the low calorie gas in the TSA treatment unit (6).

5. The gas engine using the low calorie gas as fuel according to any one of claim 3 or 4, further comprising:
a buffer tank (2) arranged at an exit of the TSA treatment unit (6) for averaging out the methane concentration of the methane gas obtained by the TSA treatment unit (6) and to be introduced into the auxiliary combustion chamber (12).

6. The gas engine using the low calorie gas as fuel according to any one of claims 1 to 5, further comprising:
a gas regulating valve (115) for adjusting an amount of the low calorie gas for the main combustion chamber (101) that is branched on an upstream side of the PSA treatment unit (1) or an upstream side of the TSA treatment unit (6);
a gas mixer (110) for producing a premixture gas using the low calorie gas of which amount is adjusted by the gas regulating valve (115), the premixture gas being introduced to the main combustion chamber (101) through the intake port (103).

## Patentansprüche

1. Gasmotor, der niederkalorisches Gas mit einer Methankonzentration von 50 % oder weniger als Treibstoff verwendet, umfassend:
eine Hauptverbrennungskammer (101), in welcher Mischgas, das das niederkalorische Gas enthält, das durch eine Einlassöffnung (103) hindurch aufgenommen wird, verbrannt wird;
eine Hilfsverbrennungskammer (12), die mit der Hauptverbrennungskammer (101) durch ein Kommunikationsloch (11) kommuniziert, wobei das niederkalorische Gas der Hilfsverbrennungskammer (12) getrennt von einem Strömungspfad zu der Hauptverbrennungskammer (101) zugeführt wird;
eine Zündkerze (13), die in der Hilfsverbrennungskammer (12) angeordnet ist, zum Zünden des niederkalorischen Gases, das in die Hilfsverbrennungskammer eingesprüht wird, um eine Zündflamme zu erzeugen, wobei das Mischgas in der Hauptverbrennungskammer (101) durch die Zündflamme verbrannt wird, die durch das Kommunikationsloch (11) hindurch ausgelassen wird; und
eine PSA-Behandlungseinheit (Druckwechseladsorptions-Behandlungseinheit) (1) zum Erhalten von Methangas mit hoher Methankonzentration, indem Unreinheiten und inaktives Gas mit Ausnahme von Methangas aus dem niederkalorischen Gas mittels Adsorption abgetrennt werden, wobei das Methangas mit hoher Methankonzentration, das von der PSA-Behandlungseinheit (1) erhalten wird, in die Hilfsverbrennungskammer (12) eingelassen wird, so dass das Methangas von der Zündkerze (13) verbrannt wird, um die Zündflamme zu erzeugen.

2. Gasmotor, der das niederkalorische Gas als Treibstoff verwendet, nach Anspruch 1, weiter umfassend:
einen Pufferbehälter (2), der an einem Ausgang der PSA-Behandlungseinheit (1) angeordnet ist, um die Methankonzentration des Methangases auszumitteln, das von der PSA-Behandlungseinheit (1) erhalten wird und in die Hilfsverbrennungskammer (12) eingelassen werden soll.

3. Gasmotor, der niederkalorisches Gas mit einer Methankonzentration von 50% oder weniger als Treibstoff verwendet, umfassend:
eine Hauptverbrennungskammer (101), in welcher Mischgas, das das niederkalorische Gas enthält, das durch eine Einlassöffnung (103) hindurch aufgenommen wird, verbrannt wird;
eine Hilfsverbrennungskammer (12), die mit der Hauptverbrennungskammer (101) durch ein Kommunikationsloch (11) kommuniziert, wobei das niederkalorische Gas der Hilfsverbrennungskammer (12) getrennt von einem Strömungspfad zu der Hauptverbrennungskammer (101) zugeführt wird;
eine Zündkerze (13), die in der Hilfsverbrennungskammer (12) angeordnet ist, zum Zünden des niederkalorischen Gases, das in die Hilfsverbrennungskammer eingesprüht wird, um eine Zündflamme zu erzeugen, wobei das Mischgas in der Hauptverbrennungskammer (101) durch die Zündflamme verbrannt wird, die durch das Kommunikationsloch (11) hindurch ausgelassen wird; und
eine TSA-Behandlungseinheit (Thermischer-Wechsel-Adsorptions-Behandlungseinheit) (6) zum Erhalten von Methangas mit hoher Methankonzentration durch einen Temperaturanstieg von ungefähr 200 °C, um Unreinheiten und inaktives Gas mit Ausnahme von Methangas aus dem niederkalorischen Gas mittels Adsorption abzutrennen, wobei das Methangas mit hoher Methankonzentration, das von der TSA-Behandlungseinheit (6) erhalten wird, in die Hilfsverbrennungskammer (12) eingelassen wird, so dass das Methangas von der Zündkerze (13) verbrannt wird, um die Zündflamme zu erzeugen.

4. Gasmotor, der das niederkalorische Gas als Treibstoff verwendet, nach Anspruch 3, weiter umfassend:
eine Abgas-Einlassleitung (116) zum Transferieren eines Abgases von dem Gasmotor, wobei die Abgas-Einlassleitung (116) mit der TSA-Behandlungseinheit (6) verbunden ist, um Wärme des Abgases zu verwenden, um die Temperatur des niederkalorischen Gases in der TSA-Behandlungseinheit (6) zu erhöhen.

5. Gasmotor, der das niederkalorische Gas als Treibstoff verwendet, nach einem der Ansprüche 3 oder 4, weiter umfassend:
einen Pufferbehälter (2), der an einem Ausgang der TSA-Behandlungseinheit (6) angeordnet ist, um die Methankonzentration des Methangases auszumitteln, das von der TSA-Behandlungseinheit (6) erhalten wird und in die Hilfsverbrennungskammer (12) eingelassen werden soll.

6. Gasmotor, der das niederkalorische Gas als Treibstoff verwendet, nach einem der Ansprüche 1 bis 5, weiter umfassend:
ein Gasregelventil (115) zum Einstellen einer Menge des niederkalorischen Gases für die Hauptverbrennungskammer (101), das auf einer Stromaufwärtsseite der PSA-Behandlungseinheit (1) oder einer Stromaufwärtsseite der TSA-Behandlungseinheit (6) abgezweigt ist;
einen Gasmischer (110) zum Erzeugen eines Vormischgases unter Verwendung des niederkalorischen Gases, dessen Menge von dem Gasregelventil (115) eingestellt wird, wobei das Vormischgas in die Hauptverbrennungskammer (101) durch die Einlassöffnung (103) hindurch eingelassen wird.

## Revendications

1. Moteur à gaz utilisant un gaz basse calorie avec une concentration de méthane de 50 % ou moins en tant que combustible, comprenant :
une chambre de combustion principale (101) dans laquelle un gaz de mélange contenant le gaz basse calorie incorporé par un orifice d'entrée (103) est enflammé;
une chambre de combustion auxiliaire (12) communiquant avec la chambre de combustion principale (101) par un trou de communication (11), le gaz basse calorie étant amené à la chambre de combustion auxiliaire (12) séparément d'un chemin de flux jusqu'à la chambre de combustion principale (101) ;
une bougie d'allumage (13) agencée dans la chambre de combustion auxiliaire (12) pour allumer le gaz basse calorie pulvérisé dans la chambre de combustion auxiliaire pour produire une flamme d'allumage, le gaz de mélange dans la chambre de combustion principale (101) étant enflammé par la flamme d'allumage éjectée par le trou de communication (11) ; et
une unité de traitement APM (unité de traitement d'Adsorption à Pression Modulée) (1) pour obtenir du gaz de méthane avec une concentration de méthane élevée en séparant des impuretés et du gaz inactif à part le gaz de méthane à partir du gaz basse calorie par adsorption, le gaz de méthane avec une concentration de méthane élevée obtenu par l'unité de traitement APM (1) étant introduit dans la chambre de combustion auxiliaire (12) de sorte que le gaz de méthane est enflammé par la bougie d'allumage (13) pour produire la flamme d'allumage.

2. Moteur à gaz utilisant le gaz basse calorie en tant que combustible selon la revendication 1, comprenant en outre :
un réservoir tampon (2) agencé au niveau d'une sortie de l'unité de traitement APM (1) pour faire la moyenne de la concentration de méthane du gaz de méthane obtenu par l'unité de traitement APM (1) et à introduire dans la chambre de combustion auxiliaire (12).

3. Moteur à gaz utilisant un gaz basse calorie avec une concentration de méthane de 50 % ou moins en tant que combustible, comprenant :
une chambre de combustion principale (101) dans laquelle un gaz de mélange contenant le gaz basse calorie incorporé par un orifice d'entrée (103) est enflammé ;
une chambre de combustion auxiliaire (12) communiquant avec la chambre de combustion principale (101) par un trou de communication (11), le gaz basse calorie étant amené à la chambre de combustion auxiliaire (12) séparément d'un chemin de flux jusqu'à la chambre de combustion principale (101) ;
une bougie d'allumage (13) agencée dans la chambre de combustion auxiliaire (12) pour enflammer le gaz basse calorie pulvérisé dans la chambre de combustion auxiliaire pour produire une flamme d'allumage, le gaz de mélange dans la chambre de combustion principale (101) étant enflammé par la flamme d'allumage éjectée par le trou de communication (11) ; et
une unité de traitement ATM (unité de traitement d'Adsorption à Température Modulée) (6) pour obtenir un gaz de méthane avec une concentration de méthane élevée par une augmentation de température d'approximativement 200 °C pour séparer des impuretés et du gaz inactif à part le gaz de méthane du gaz basse calorie par adsorption, le gaz de méthane avec une concentration de méthane élevée obtenu par l'unité de traitement ATM (6) étant introduit dans la chambre de combustion auxiliaire (12) de sorte que le gaz de méthane est enflammé par la bougie d'allumage (13) pour produire la flamme d'allumage.

4. Moteur à gaz utilisant le gaz basse calorie en tant que combustible selon la revendication 3, comprenant en outre :
un tuyau d'introduction de gaz d'échappement (116) pour transférer un gaz d'échappement provenant du moteur à gaz, le tuyau d'introduction de gaz d'échappement (116) étant relié à l'unité de traitement ATM (6) afin d'utiliser la chaleur du gaz d'échappement pour élever la température du gaz basse calorie dans l'unité de traitement ATM (6).

5. Moteur à gaz utilisant le gaz basse calorie en tant que combustible selon l'une quelconque des revendications 3 ou 4, comprenant en outre :
un réservoir tampon (2) agencé au niveau d'une sortie de l'unité de traitement ATM (6) pour faire la moyenne de la concentration de méthane du gaz de méthane obtenu par l'unité de traitement ATM (6) et à introduire dans la chambre de combustion auxiliaire (12).

6. Moteur à gaz utilisant le gaz basse calorie en tant que combustible selon l'une quelconque des revendications 1 à 5, comprenant en outre :
une vanne de régulation de gaz (115) pour ajuster une quantité du gaz basse calorie pour la chambre de combustion principale (101) qui est ramifiée sur un côté amont de l'unité de traitement APM (1) ou un côté amont de l'unité de traitement ATM (6);
un mélangeur de gaz (110) pour produire un gaz de prémélange utilisant le gaz basse calorie dont la quantité est ajustée par la vanne de régulation de gaz (115), le gaz de prémélange étant introduit dans la chambre de combustion principale (101) par l'orifice d'entrée (103).
